# EUROPEAN PATENT APPLICATION

(11) **EP 1 197 406 A1**
(43) Date of publication of application: **17.04.2002**
(21) Application number: 00203530.1
(22) Date of filing: 13.10.2000
(51) Int. Cl.: B60S 1/38

(54) **Windshield wiper**

(71) Applicant: Federal-Mogul S.A., 6790 Aubange (BE)
(72) Inventor: Orjela, Gurdev, 6700 Arlon (BE); Boland, Xavier, 6700 Arlon (BE); Gherra, Eraldo, 10040 Druemto (IT)
(74) Representative: Hooiveld, Arjen Jan Winfried

(57) **Abstract**

Windshield wiper comprising an oscillating arm and a frame connected thereto for receiving a wiping blade, wherein the wiping blade is reinforced by at least two backing strips located in longitudinally extending recesses provided opposite each other in the wiping blade, said recesses defining between them a longitudinally extending connection part of the wiping blade, wherein the frame has at least one claw which partially surrounds the backing strips and the upper portion of the wiping blade, and wherein means extending laterally from the interior longitudinal edge of at least one backing strip are provided for retaining the backing strip on the wiping blade, characterized in that the connecting part is deformed asymmetrically vis-a-vis the plane of symmetry of the wiping blade by said means.

## Description

The invention relates to a windshield wiper comprising an oscillating arm and a frame connected thereto for receiving a wiping blade, wherein the wiping blade is reinforced by at least two backing strips located in longitudinally extending recesses provided opposite each other in the wiping blade, said recesses defining between them a longitudinally extending connection part of the wiping blade, wherein the frame has at least one claw which partially surrounds the backing strips and the upper portion of the wiping blade, and wherein means extending laterally from the interior longitudinal edge of at least one backing strip are provided for retaining the backing strip on the wiping blade. The invention also refers to the backing strip as such, and to a process for manufacturing the windshield wiper.

Such a windshield wiper is known from German patent publication No. 32 08 749 (Valeo Systèmes d'Essuyage S.A.). With a windshield wiper of this type the wiping blade is made of an elastic material, such as rubber, said wiping blade being reinforced by two metal backing strips respectively inserted in two longitudinally extending recesses in said wiping blade. The frame of the known windshield wiper has several claws retaining the wiping blade and the two backing strips inserted therein in such a way, that a claw located at one end of the wiping blade locally fixates said blade, whereas the other claws allow a movement of the wiping blade in its longitudinal direction. Accordingly said wiping blade is permitted to follow any curvature changes of the windshield on which it lies. The laterally extending means of the known backing strip contain outwardly bent lips on the interior as well as on the exterior edge of each backing strip. These lips serve to retain the backing strip in its position.

A disadvantage of a windshield wiper according to the above German patent publication is that the outwardly bent lips on the interior longitudinal edge of each backing strip -due to their sharpness- deeply penetrate into the elastic material of the wiping blade, so that fractures therein occur during assembly and during any longitudinal movement mentioned earlier of the wiping blade. As a result, the connecting part with its small dimensions along the longitudinal recesses may even tear. Besides, due to the complex construction of the backing strips used, these are difficult to manufacture and therefore rather expensive.

It is an object of the invention to obviate these disadvantages, in the sense that at minimum costs -without using complex machinery- simple backing strips are proposed having excellent retaining properties and being easy to manufacture. It is noted that the present invention particularly relates to windshield wipers for motor cars, but is not restricted thereto; it also refers to rail coaches and all other (fast) vehicles. Furthermore, it is to be understood that the present invention also bears on a windshield wiper having an oscillating arm and a frame constructed as one part.

Thereto, a windshield wiper mentioned in the preamble according to the invention is characterized in that the connecting part is deformed asymmetrically vis-a-vis the plane of symmetry of the wiping blade by said means. By making use of deformation of the connecting part (or middle band extending in longitudinal direction), both backing strips are firmly held in their respective longitudinal recesses, without the connecting part being damaged or teared, as the connecting part is not being penetrated or compressed.

In an embodiment of a windshield wiper according to the invention the connecting part is bent at at least one location by said means. Preferably, the connecting part is bent at three points thus optimizing the retention of the backing strips.

In a further embodiment of a windshield wiper according to the invention each backing strip is provided with said means in the form of at least one protrusion extending laterally from the interior longitudinal edge thereof and wherein the protrusions of both backing strips cooperate with each other, such that the connecting part is bent at at least two locations by the protrusions. In other words, the protrusions of both backing strips exert an inwardly directed force on the connecting part forcing it to bend at two points or more.

In a further embodiment of a windshield wiper according to the invention the one backing strip is provided with the means in the form of at least one protrusion extending laterally from the interior longitudinal edge thereof, wherein the other backing strip is provided with at least one recess interrupting the interior longitudinal edge thereof and wherein the protrusion and the recess cooperate with each other, such that the connecting part is bent at at least one location by the protrusion and the recess. In such a case the protrusion and the recess are located (preferably diametrically) opposite each other on opposite sides of the connecting part.

In a further embodiment of a windshield wiper according to the invention the one backing strip is provided with the means in the form of a least one protrusion extending laterally from the interior longitudinal edge thereof, wherein the other backing strip is provided with an at least substantially straight interior longitudinal edge and wherein the protrusion and the at least substantially straight interior longitudinal edge cooperate with each other, such that the connecting part is bent at at least one location by the protrusion and the at least substantially straight interior longitudinal edge. Also in this case the connecting part is forced to bend due to opposite forces exerted by the protrusion and the straight edge.

In a further embodiment of a windshield wiper according to the invention at least one stop extending laterally from the exterior longitudinal side of each backing strip is provided, said stops retaining the backing strips on the claw.

The invention furthermore refers to a backing strip for use in a windshield wiper according to the invention.

Finally, the invention relates to a process for manufacturing a windshield wiper according to the invention, comprising the step of carrying out a punching operation for forming said means allowing the connecting part to deform asymmetrically vis-a-vis the plane of symmetry of the wiping blade by said means during use.

Further objects and effects of the invention will become apparent from the following detailed description taken in conjunction with the drawings, in which
- figure 1 shows a perspective view of a wiping blade with two backing strips according to the invention;
- figure 2 is a (partly) sectional view of the wiping blade of figure 1 showing several embodiments a through c.

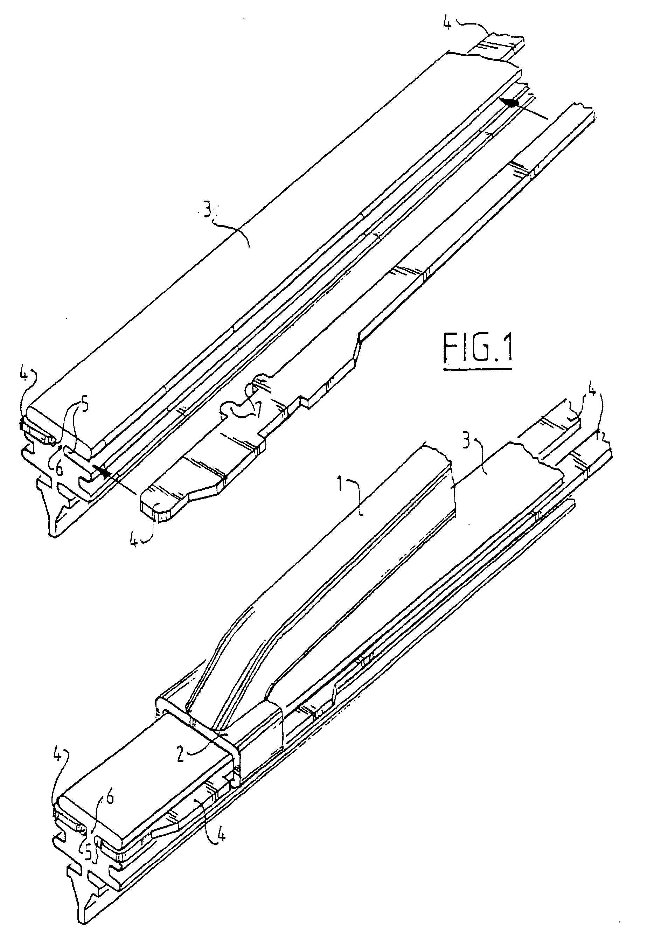

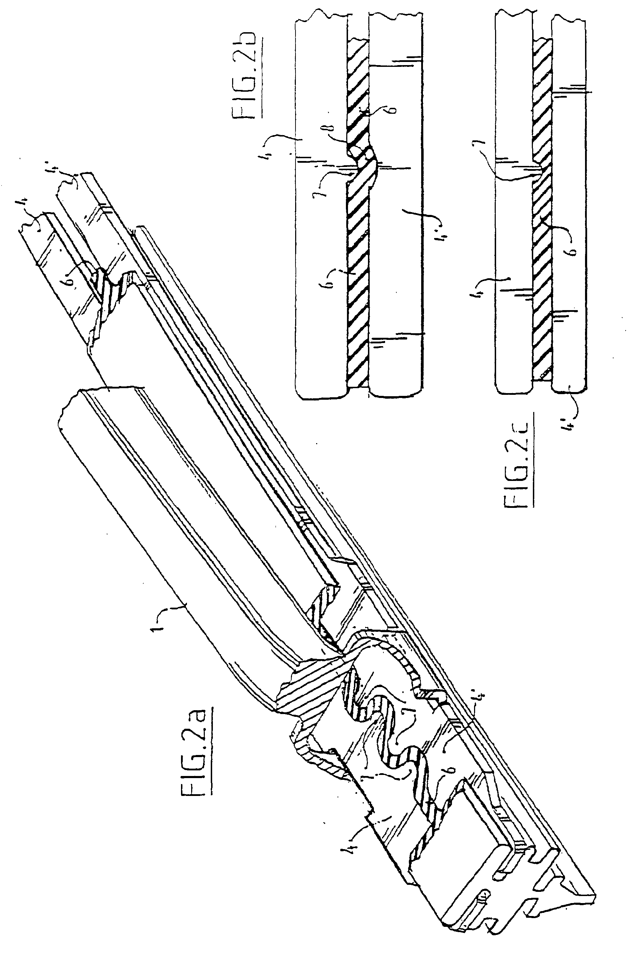

Figure 1 shows a perspective view of a part of a windshield wiper according to the invention, representing a frame 1 having several claws 2 of which only one is depicted, which claws 2 partially surround the upper portion of a wiping blade 3 and two backing strips 4 inserted in longitudinally extending recesses 5 provided in the wiping blade 3. The wiping blade 3 and the backing strips 4 are preferably made of rubber and metal, respectively. According to the invention both backing strips 4 are preferably made of mutually cooperating rounded protrusions extending laterally from the interior longitudinal edge thereof forcing an asymmetrically deformation of a thin connecting part 6 extending between the recesses 5 in longitudinal direction of the wiping blade 3, all seen relative to the plane of symmetry of the wiping blade 3. This will be explained further with the help of figure 2, wherein corresponding reference numerals have been used.

Figure 2 is a (partly) sectional view of the wiping blade 3, wherein
a. in figure 2a both backing strips 4,4' are each equipped with two rounded protrusions 7 extending laterally from the interior longitudinal edge of each backing strip 4,4', wherein the protrusions 7 of the one backing strip 4 are staggered relative to the protrusions 7 of the other backing strip 4', such that the small connecting part 6 is forced to bend at four points of this part, thereby ensuring that the backing strips 4,4' are retained well in their longitudinal recesses 5, without a risk that the connection part 6 damages or tears. After all, the protrusions 7 do not penetrate or compress the rubber material of this thin connecting part 6.
b. In figure 2b (being an upper view of the relevant section with retention means of figure 1, but according to another embodiment) the one backing strip 4 is provided with one rounded protrusion 7, whereas the other backing strip 4' is equipped with a recess 8 interrupting the interior longitudinal edge of the backing strip 4', said recess 8 lying (preferably straight) opposite the rounded protrusion 7, again forcing to bend the thin-walled connecting part 6 at one location thereof, with all the advantages as mentioned under point a above.
c. In figure 2c (being an upper view of the relevant section with retention means of figure 1, but according to another embodiment) the one backing strip 4 is provided with one rounded protrusion 7, whereas the other backing strip 4' is not equipped with any special means at all; in other words the backing strip 4' has a straight interior longitudinal edge again leading to bending of the connecting part 6 at the location thereof, with the same advantages as mentioned under point a above.

The invention thus described, it will be obvious that the same may be varied in many ways. For example, more protrusions (rounded or not) than two on each backing strip may be used, whether or not in combination with apertures as mentioned under point b above. Such variations are not to be regarded as a departure from the spirit and scope of the invention, and all such modifications as would be obvious to a person skilled in the art are intended to be included in the scope of the appended claims.

## Claims

1. Windshield wiper comprising an oscillating arm and a frame connected thereto for receiving a wiping blade, wherein the wiping blade is reinforced by at least two backing strips located in longitudinally extending recesses provided opposite each other in the wiping blade, said recesses defining between them a longitudinally extending connection part of the wiping blade, wherein the frame has at least one claw which partially surrounds the backing strips and the upper portion of the wiping blade, and wherein means extending laterally from the interior longitudinal edge of at least one backing strip are provided for retaining the backing strip on the wiping blade, **characterized in that** the connecting part is deformed asymmetrically vis-a-vis the plane of symmetry of the wiping blade by said means.

2. Windshield wiper according to claim 1, wherein the connecting part is bent at at least one location by said means.

3. Windshield wiper according to claim 1 or 2, wherein each backing strip is provided with said means in the form of at least one protrusion extending laterally from the interior longitudinal edge thereof and wherein the protrusions of both backing strips cooperate with each other, such that the connecting part is bent at at least two locations by the protrusions.

4. Windshield wiper according to claim 1 or 2, wherein the one backing strip is provided with the means in the form of at least one protrusion extending laterally from the interior longitudinal edge thereof, wherein the other backing strip is provided with at least one recess interrupting the interior longitudinal edge thereof and wherein the protrusion and the recess cooperate with each other, such that the connecting part is bent at at least one location by the protrusion and the recess.

5. Windshield wiper according to claim 1 or 2, wherein the one backing strip is provided with the means in the form of a least one protrusion extending laterally from the interior longitudinal edge thereof, wherein the other backing strip is provided with an at least substantially straight interior longitudinal edge and wherein the protrusion and the at least substantially straight interior longitudinal edge cooperate with each other, such that the connecting part is bent at at least one location by the protrusion and the at least substantially straight interior longitudinal edge.

6. Windshield wiper according to any of the preceding claims 1 through 5, wherein at least one stop extending laterally from the exterior longitudinal side of each backing strip is provided, said stops retaining the backing strips on the claw.

7. Backing strip for use in a windshield wiper according to any of the preceding claims 1 through 6.

8. Process for manufacturing a windshield wiper according to any of the preceding claims 1 through 6, comprising the step of carrying out a punching operation for forming said means allowing the connecting part to deform asymmetrically vis-a-vis the plane of symmetry of the wiping blade by said means during use.
